(19) Europäisches Patentamt
European Patent Office
Office européen des brevets

(11) **EP 2 392 063 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **09795736.9**

(22) Anmeldetag: **04.12.2009**

(51) Int Cl.:
***H02H 7/18*** *(2006.01)*

(86) Internationale Anmeldenummer:
**PCT/EP2009/066390**

(87) Internationale Veröffentlichungsnummer:
**WO 2010/086054 (05.08.2010 Gazette 2010/31)**

(54) **VERFAHREN UND VORRICHTUNG FÜR EINE ÜBERLASTDETEKTION BEI BATTERIEBETRIEBENEN GERÄTEN MIT EINEM ELEKTROMOTOR**

METHOD AND APPARATUS FOR AN OVERLOAD DETECTION IN BATTERY-OPERATED DEVICES HAVING AN ELECTRIC MOTOR

PROCÉDÉ ET DISPOSITIF DE DÉTECTION DE SURCHARGE POUR DES APPAREILS À PILE POURVUS D'UN MOTEUR ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.01.2009 DE 102009000459**

(43) Veröffentlichungstag der Anmeldung:
**07.12.2011 Patentblatt 2011/49**

(73) Patentinhaber: **Robert Bosch GmbH**
**70442 Stuttgart (DE)**

(72) Erfinder: **LIEBENOW, Cornelius**
**70771 Leinfelden-Echterdingen (DE)**

(56) Entgegenhaltungen:
**EP-A1- 1 825 964    DE-A1-102005 038 225**
**US-A- 5 343 137**

EP 2 392 063 B1

**Beschreibung**

Stand der Technik

Die Erfindung betrifft ein Verfahren zur Detektion einer Überlastsituation bei einem batteriebetriebenen Gerät mit einem Elektromotor, wobei ein Laststrom des Elektromotors ermittelt und verwendet wird, um auf eine thermische Überlastung der Batterie zu schließen. Die Erfindung betrifft außerdem eine entsprechende Vorrichtung gemäß dem Oberbegriff des Anspruchs 11.

Ein derartige Überlast-Überwachung ist bereits aus der DE 10 2005 038 225 A1 bekannt.

Zahlreiche Arten von Elektrowerkzeugen oder elektrischen Gartengeräten können ohne Verbindung zum Stromnetz betrieben werden. Für die Speicherung der Energie in diesen "schnurlosen" Elektrowerkzeugen, Gartengeräten oder Elektrofahrzeugen werden elektrochemische Zellen verwendet, die entweder fest im Gerät eingebaut sind oder sich in vom Gerät abnehmbaren Batterien befinden. Der Begriff "Batterien" wird im Folgenden für alle derartigen Zellen, insbesondere auch für wiederaufladbare Zellen, zum Beispiel Li-Ionen-Zellen eines Akkus, verwendet.

Um die Sicherheit und ein über lange Zeit stabiles Energie-Speichervermögen der elektrochemischen Zellen zu gewährleisten, sollten die Zellen vor übermäßiger Erwärmung durch eine zu rasche Entnahme der in den Zellen gespeicherten Energie geschützt werden.

Diese Begrenzung kann am einfachsten durch Verwendung von Bauelementen erfolgen, die entweder durch direkten Wärmefluss oder unter zu hohem Stromfluss und der dadurch stattfindenden Temperaturerhöhung des Bauelementes eine Begrenzung oder eine Unterbrechung des Stromflusses herbeiführen, also beispielsweise durch die aus dem Stand der Technik bekannten Thermosicherungen oder Bi-Metall-Schalter. Ein Nachteil der Verwendung von einfachen derartigen Bauelementen, die sich im Strompfad zwischen dem Energiespeicher und dem Verbraucher befinden, liegt darin, dass sie im Allgemeinen nur einen groben Schutz darstellen können. Dies resultiert daraus, dass zum Betrieb von Elektrowerkzeugen und ähnlichen Geräten typischerweise relativ hohe Ströme gezogen werden müssen, die in ihrer Größenordnung nahe an den Überlast- oder Kurzschlussströmen liegen, deren Fluss durch die Verwendung einer Sicherung verhindert werden soll.

Zur Begrenzung der Erwärmung der Batterie im Betrieb ist es auch bereits bekannt, eine Regelung oder Steuerung in das Gerät zu integrieren - etwa in Form einer elektronischen Schaltung. Die Temperatur der Zellen wird dabei mit einem oder mehreren Temperatur-Messfühlern erfasst, der sich an oder in der Nähe der Zell-Oberfläche befindet. So kann zum Beispiel ein NTC-Temperatursensor auf eine Stelle des Zellengehäuses geheftet werden, von der man annimmt, dass sie die Innentemperatur der Zelle gut widerspiegelt. Typischerweise sind die Temperaturgrenzen für die erzwungene Beschränkung des Laststromes als statische Größen implementiert, im einfachsten Falle als ein maximal zulässiger Temperaturwert. Wird mittels des Temperatursensors an den Zellen ein Überschreiten dieser Temperatur ermittelt, so wird der Stromfluss unterbrochen. Dabei ist es auch bekannt, mehrere Temperaturgrenzen zu implementieren, bei deren Überschreiten der Strom in entsprechend vielen Stufen zunehmend begrenzt wird. Ein Nachteil der Verwendung statischer Temperaturgrenzen besteht darin, dass diese Temperaturgrenzen nur für recht genau definierte Werte des Entladestroms die optimale Wirkung hinsichtlich des Schutzes der Zellen vor Überhitzung erzielen. So ist es denkbar, dass durch die Entnahme eines sehr hohen Stromes sich die Zelle intern bereits sehr stark erwärmt hat, durch die Trägheit der Wärmeleitung an die Außenwand der Zelle eine übermäßige Erhitzung der Zelle aber erst später erkannt wird und die notwendige Beschränkung des Stromes erst deutlich später einsetzt. Das kann ein zu spätes Erkennen einer kritischen Situation bedeuten. Um diese Situation zu verhindern, können die statischen Temperaturgrenzen für das Beschränken des maximal zulässigen Entladestroms tiefer gesetzt werden, so dass bereits in einem früheren Stadium der Aufheizung der Zellen interveniert wird. Dies bedeutet jedoch, dass bei moderateren Entladungen, bei denen kein so starkes Gefälle zwischen Zell-Innentemperatur und Zell-Außentemperatur vorliegt, der Strom früher als eigentlich beabsichtigt eingeschränkt, beziehungsweise unterbrochen wird. Um dem unzulässig hohen Aufheizen der Zellen bei Entnahme sehr hoher Ströme entgegenzuwirken, kann die Implementierung sehr niedriger Temperaturgrenzen notwendig sein, so dass ein normales Arbeiten mit moderateren Strömen bereits bei leicht erhöhter Umgebungstemperatur stark eingeschränkt oder sogar ganz unmöglich wird.

Aus der oben genannten gattungsgemäßen DE 10 2005 038 225 A1 ist ein Verfahren zur Überlastdetektion bekannt, bei dem zur Begrenzung des Laststromes nicht von der (gemessenen) Temperatur der Zellen ausgegangen wird, sondern bei dem die Strombegrenzung auf Grundlage des aus den Zellen entnommenen Stromes ermittelt wird. In der genannten Offenlegungsschrift wird vorgeschlagen, aus der Differenz zwischen dem Wert des Laststromes und mindestens einem gespeicherten Stromwert auf eine thermische Überlastung von Komponenten des Antriebsstranges, z.B. der Batterie, zu schließen. Es wird auch vorgeschlagen, nicht den einfachen Augenblicks-Wert des Laststromes, sondern einen entsprechend seiner Höhe gewichteten Wert, oder einen über eine bestimmte Zeit integrierten Stromwert, für die Differenzbildung zu verwenden. Weiterhin wird vorgeschlagen, den Strom bei erkannter Überlastsituation durch eine Regelung zu reduzieren oder zu unterbrechen. Es wird erwähnt, dass die Betriebstemperatur in Form einer Eingangsgröße bei der Bestimmung von Systemparametern in die rechnerische Bestimmung einer Überlastsituation eingehen kann. Ein Nachteil des Schutzes der Zellen vor Überhitzen gemäß dem bekannten Verfahren, also basierend allein auf der Messung des Stromes, besteht darin, dass mögliche Änderungen im System, die zu einem unerwartet hohen Temperaturanstieg einzelner Komponenten führen können - etwa die Alterung oder Schädigung von Zellen und die damit verbundene Zunahme des Innenwiderstandes - nicht berücksichtigt werden. Zwar wird in jedem Falle der Strom gemessen, jedoch wird die tatsächliche Temperatur an den Zellen nicht gemessen, beziehungsweise nur als Eingangsgröße für die Berechnung genutzt. Nachteilig erscheint außerdem die Notwendigkeit, dass bereits beim Design, spätestens bei der endgültigen Implementierung, eine Festlegung auf bestimmte maximal zulässige Ströme erfolgen muss, was bei einer späteren Änderung des Systems, z.B. bei Verwendung anderer Zellen (Hersteller, Typ), zu Einschränkungen führt, da ein stets gleiches thermisches Verhalten der verwendeten Komponenten notwendig ist. Ein unautorisierter Wechsel der ursprünglich eingebauten Zellen durch Zellen mit einem anderen Temperaturverhalten beziehungsweise Innenwiderstand kann demnach zu Sicherheitsproblemen führen.

Offenbarung der Erfindung

Das erfindungsgemäße Verfahren zur Überlastdetektion ist in Anspruch 1 gekennzeichnet, während eine Überwachungsvorrichtung zur Detektion einer Überlastsituation bei batteriebetriebenen Geräten im unabhängigen Anspruch 11 gekennzeichnet ist.

Bei dem erfindungsgemäßen Verfahren ist, über die gattungsgemäßen Merkmale hinaus, vorgesehen, dass mittels einer vorgebbaren vom ermittelten Laststrom abhängigen Funktion eine zeitlich variable maximal zulässige Temperaturgrenze für die Batterie berechnet wird, wobei die Funktion ihren maximalen Wert, der einer vorgebbaren statischen Temperaturgrenze entspricht, bei verschwindendem Laststrom annimmt, und dass die berechnete variable Temperaturgrenze mit einer aktuellen, gemessenen Temperatur der Batterie verglichen und aus dem Resultat des Vergleichs auf eine thermische Überlastung der Batterie geschlossen wird.

Der Kern der Erfindung besteht, ausgehend von einer statischen Temperaturgrenze als Funktionsmaximum, in der Berechnung von variablen, das heißt laststromabhängigen Temperaturgrenzen und einem Vergleich der tatsächlich an den elektrochemischen Zellen gemessenen Temperatur mit der berechneten, aktuell gültigen Temperaturgrenze. Aus dem Resultat dieses Vergleichs wird auf das Vorliegen oder Nicht-Vorliegen einer thermischen Überlastung der Batterie geschlossen, so dass gegebenenfalls eine als Gegenmaßnahme dienende Aktion eingeleitet werden kann.

Gegenüber einfachen Lösungen wie der Verwendung einer Thermosicherung oder eines Bimetallschalters besteht der Vorteil der Erfindung darin, dass der Laststrom nicht beim Überschreiten einer bestimmten Temperatur unterbrochen wird, sondern dass die Vorgeschichte der Erwärmung berücksichtigt wird, indem die aktuelle Temperaturgrenze sich nicht einfach nur aus dem aktuellen Laststromwert ergeben muss. Somit ist eine Unterscheidung zwischen einer schnellen Erwärmung aufgrund hoher Lastströme und der allmählichen Erwärmung durch moderate Lastströme möglich. Die thermische Trägheit der Zellen, die im ersteren Falle zu einem zu späten Ansprechen der einfachen thermischen Sicherung führen kann, wird durch das erfindungsgemäße Verfahren berücksichtigt. Dieses ist vor allem bei einer Entladung der Zellen mit sehr hohen Lastströmen von Nutzen, da es hier selbst nach einem Abschalten des hohen Laststromes durch eine Thermosicherung noch zu einer beträchtlichen weiteren Zunahme der gemessenen Zellentemperatur kommt ("Nachheizen").

Ein weiterer Vorteil des vorgeschlagenen Verfahrens besteht darin, dass damit für unterschiedliche Anwendungen eines Gerätes mit Elektromotor und den damit verbundenen unterschiedlichen typischen Stromentnahmen das zu späte Erkennen eines bereits im Zellinneren erfolgten unzulässig hohen Temperaturanstieges verhindert wird, andererseits aber auch kurzzeitig hohe Stromentnahmen ermöglicht und nicht durch eine dauerhaft sehr tief gesetzte Temperaturgrenze verhindert werden.

Der Vorteil der erfindungsgemäßen vorausschauenden Berechnung und Anwendung einer maximal zulässigen Temperatur für die elektrochemischen Zellen auf der Grundlage des zeitnah ermittelten Laststromes besteht darin, dass der Entstehung von übermäßiger Wärme in der Zelle bereits Rechung getragen werden kann, bevor sich das Auftreten von hohen Temperaturen innerhalb der Zelle durch eine Erwärmung des Zellmantels bemerkbar macht.

Im Unterschied zu der im oben genannten gattungsbildenden Stand der Technik dargestellten Lösung, bei der die gemessene Temperatur (soweit berücksichtigt) nur eine Eingangsgröße für die Berechnung eines maximal zulässigen Stromwertes ist, wird erfindungsgemäß durch Vergleich mit der berechneten variablen Temperaturgrenze auf einen tatsächlich gemessenen Temperaturwert reagiert, so dass direkt auf eine thermische Überlastung der Batterie geschlossen werden kann. Das erfindungsgemäße Verfahren zur Überlastdetektion funktioniert im Sinne eines Sicherheitsmechanismus auch dann, wenn eine oder mehrere Zellen schon gealtert, geschädigt oder defekt sind und sich daher schneller erwärmen, als es ursprünglich vorgesehen und beispielsweise mithilfe eines Systemparameters hinterlegt worden ist.

Gemäß einer Ausführungsform der Erfindung wird ein über ein vorgebbares Zeitintervall integrierter oder gemittelter Laststromwert als Eingangsgröße der laststromabhängigen Funktion zur Berechnung der variablen Temperaturgrenze verwendet. Gemäß einer Weiterbildung dieser Ausführungsform ist vorgesehen, dass der Laststromwert vor der Integration oder Mittelung mit einem Exponenten potenziert wird. Je nach Art der im Betrieb zu erwartenden Überlastsituationen kann auf diese Weise insbesondere der zeitlich zurück- beziehungsweise vorausschauende Horizont der Laststromabhängigkeit voreingestellt werden.

Durch das erfindungsgemäße Verfahren eröffnet sich die Möglichkeit, dass der aktuelle Laststrom als Gegenmaßnahme auf eine festgestellte thermische Überlastung reduziert oder unterbrochen wird. Auch andere Aktionen, wie zum Beispiel die Warnung der Anwenders durch ein optisches oder akustisches Signal, oder das Einschalten einer Zwangskühlung der Zellen im Batteriepack, sowie die Kombination mehrerer Aktionen, sind möglich.

Ausgehend von verschiedenen statischen Temperaturgrenzen und/oder verschiedenen Funktionen können gemäß einer weiteren vorteilhaften Ausführungsform der Erfindung mehrere variable Temperaturgrenzen berechnet werden, wobei der Laststrom erst beim Überschreiten der höchsten berechneten variablen Temperaturgrenze unterbrochen wird, während der Laststrom beim Überschreiten der niedrigeren berechneten variablen Temperaturgrenzen jeweils auf bestimmte, vorgebbare Werte reduziert wird. Dadurch wird eine flexiblere, abgestufte Reaktion der Überwachung auf die Überlast ermöglicht.

Für die Berechung der Temperaturgrenzen wird gemäß einer weiteren vorteilhaften Ausführungsform der Erfindung eine Funktion gewählt, die das thermische Verhalten, wie z.B. die thermische Trägheit der Zelle, hinsichtlich der messbaren Temperaturerhöhung nach dem Fließen eines bestimmten, hohen Laststromes berücksichtigt. Im Anschluss an diese Ausführungsform ist es auch möglich, mindestens eine, das thermische Verhalten der Batterie beschreibende und in die Funktion eingehende, Kenngröße in dem batteriebetriebenen elektrischen Gerät dynamisch zu ermitteln.

Bei allen Ausführungsformen kann der Laststrom gemessen oder anhand eines im Gerät ablaufenden Prozesses, der mit dem Betrieb des Elektromotors in Verbindung steht, näherungsweise erfasst, beziehungsweise geschätzt werden.

Da die Überlastdetektion erfindungsgemäß die Vorgeschichte der Erwärmung berücksichtigt, braucht die Temperatur der Batterie nicht in technisch aufwändiger Weise im Inneren überwacht werden, sondern es genügt, die Temperatur an einem oder mehreren Punkten an oder in der Nähe der elektrochemischen Zellen der Batterie zu messen.

Eine erfindungsgemäße Überwachungsvorrichtung weist, über die gattungsgemäßen Merkmale hinaus, eine Logikeinrichtung auf, in der eine vorgebbare vom ermittelten Laststrom abhängige Funktion implementiert ist, um aus einer in der Logikeinrichtung gespeicherten maximal zulässigen statischen Temperaturgrenze eine zeitlich variable Temperaturgrenze zu berechnen und diese mit der aktuellen, mittels eines Sensors gemessenen Temperatur der Batterie zu vergleichen, um daraus auf eine thermische Überlastung der Batterie zu schließen.

Die Erfindung wird im Folgenden anhand eines in der Zeichnung dargestellten Ausführungsbeispiels näher beschrieben. Es zeigen:

Figur 1 ein symbolisch dargestelltes Ausführungsbeispiel eines Elektrohandwerkzeugs mit einer Überwachungsvorrichtung,

Figur 2 ein Diagramm, das in seinem unteren Teil den zeitlichen Verlauf des Laststromes und in seinem oberen Teil den korrespondierenden Verlauf der in mehreren Varianten berechneten variablen Temperaturgrenze darstellt.

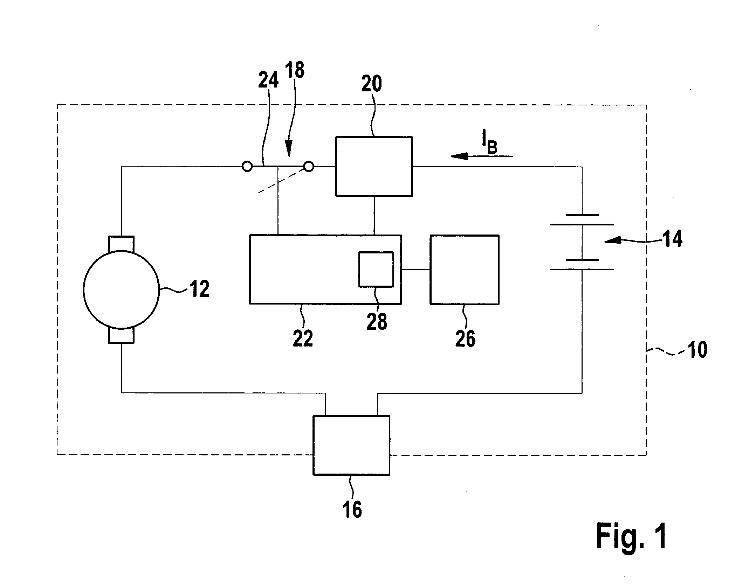

Figur 1 zeigt ein Elektrohandwerkzeug 10 einem Elektromotor 12, wobei das Elektrohandwerkzeug 10 aus einem Akkumulator 14 gespeist wird. Ausgehend vom Akkumulator 14 sind in dem Stromkreis ein Bedienelement 16, der Elektromotor 12, eine Unterbrechungsvorrichtung 18 und eine Strommesseinrichtung 20 angeordnet. Die Unterbrechungsvorrichtung 18 wird von einer Überwachungsvorrichtung 22 angesteuert. Die Unterbrechungsvorrichtung 18 weist einen Schalter 24 auf (auch eine Ausführung als Halbleiterbauelement ist möglich), der im Regelfall geschlossen ist, bei Bedarf aber von der Überwachungsvorrichtung 22 geöffnet werden kann. Die geöffnete Position des Schalters 24 ist mittels einer gestrichelten Linie angedeutet. Schließlich ist dem Akkumulator 14 eine Temperaturmesseinrichtung 26 zugeordnet, die die Temperatur des Akkumulators 14 erfasst. In der Überwachungsvorrichtung 22 beziehungsweise in der Logikeinrichtung 28 ist mindestens ein statischer Temperaturgrenzwert gespeichert, der in diesem Fall hardwaremäßig fest hinterlegt ist.

Für die Anwendung des erfindungsgemäßen Verfahrens sind die Messung des Laststromes I und die Messung der Temperatur an oder in der Nähe der elektrochemischen Zellen 14 notwendig. Die gemessenen Stromwerte und Temperaturinformationen werden in der Einheit 22 verarbeitet, die gegebenenfalls auch die Reduzierung oder Unterbrechung des Laststromes veranlasst.

Für die Messung des Stromes kann der Spannungsabfall über einen Shunt-Widerstand oder auch ein anderer geeigneter Strommesswandler 20 genutzt werden. Die Strommessung kann kontinuierlich erfolgen oder aber in einem angemessenen zeitlichen Intervall (z.B. im Sekundentakt). Die Temperaturmessung ($T_{Zelle}$) erfolgt mit einem oder mehreren geeigneten Temperatursensor(en) 26, der/die auf der Oberfläche der verwendeten elektrochemischen Zellen 14, oder zumindest in deren Nähe platziert ist/sind. Dieser Sensor 26 kann z.B. ein NTC sein.

Die Ermittlung und Verarbeitung der Strom und Temperaturwerte wird von einer in Figur 1 dargestellten Einheit 23, etwa in Form einer elektronischen Schaltung mit Logikeinrichtung 28 (Speichereinheit, Recheneinheit und Software), realisiert. Aus den gemessenen Stromwerten wird ein (oder mehrere) Temperaturwert(e) ($T_{limit}$) berechnet, bei dem eine Begrenzung des Laststromes auf einen bestimmten Maximalwert oder die vollständige Unterbrechung des Stromflusses stattfinden muss. Dafür ist eine Funktion des Typs (1) in der Regeleinheit 22 beziehungsweise in der Logikeinrichtung 28 zu implementieren

$$T_{limit}(t) = f(\ I\ , t\ ) \qquad\qquad\qquad (1)$$

, wobei $T_{limit}(t)$ einen berechneten zulässigen Temperatur-Maximalwert $T_{limit}$ zum Zeitpunkt t bezeichnet.

Die Regelschaltung 22 kann in Abhängigkeit vom Ergebnis des Vergleiches von der aus der Berechnung einer in diesem Moment gültigen Temperaturgrenze $T_{limit}$ und der an den Zellen gemessenen Temperatur einen Laststrom uneingeschränkt zulassen oder - so die an den Zellen gemessene Temperatur ($T_{Zelle}$) bereits über einer errechneten Grenztemperatur oder in einem bestimmten Temperaturintervall zu einer Grenztemperatur $T_{limit}$ liegt - eine Verringerung oder auch eine Unterbrechung des aktuellen Laststromes bewirken.

Sinnvollerweise kann der Laststrom über ein gewisses Zeitintervall integriert oder gemittelt werden. Darüber hinaus kann nicht nur der durchschnittliche (Entlade-)Strom, sondern auch ein über eine bestimmte Zeit integrierter potenzierter Wert desselben, etwa das Quadrat oder gar ein mit einem größeren Exponenten potenzierter Wert, als Eingangsgröße für die Korrektur der Temperaturgrenzen verwendet werden.

Es können auch mehrere Temperaturwerte ($T_{limit}$) berechnet werden, etwa ein Wert ($T_{limit-max}$), bei dessen Erreichen der Fluss des Laststroms vollständig unterbrochen wird und weitere Temperaturwerte ($T_{limit\ 1,\ 2...}$), die Schwellenwerte darstellen. Beim Überschreiten der Schwellenwerte durch die an den Zellen 14 gemessene Temperatur ($T_{Zelle}$) wird der Laststrom bereits auf bestimmte Werte begrenzt, bevor er beim Erreichen von $T_{limit-max}$ ganz unterbrochen wird.

Aufgrund der Berechnung von variablen Temperaturgrenzen wird eine Aufhebung der Stromunterbrechung oder der Strombeschränkung entweder durch eine Abkühlung der Zellen 14 (aktiv oder passiv), oder auch durch eine Belastung der Zellen mit geringem Strom, oder die Einhaltung der durch eine Stromunterbrechung erzwungenen Ruhephase erreicht. Das entsprechende Verhalten kann durch die Auswahl einer geeigneten Funktion (1) erreicht werden.

Die verschieden Temperaturgrenzen ($T_{limit-max}$, $T_{limit\ 1,\ 2...}$) für das einsetzende Beschränken des zugelassenen Laststroms können auch nach unterschiedlichen Formeln berechnet werden, wie es beispielhaft weiter unten beschrieben wird.

Die Umgebungstemperatur, in der das Gerät betrieben wird und die z.B. mit einem weiteren Sensor gemessen werden kann, kann ebenfalls als Eingangsgröße in die Berechnung der Temperaturgrenze ($T_{limit}$) eingehen, wie in der folgenden Gleichung (2) angedeutet

$$T_{limit}(t) = f(\ I,\ t,\ T_{Umgebung}) \qquad\qquad\qquad (2)$$

Neben dem aus dem während des Betriebs des Elektrowerkzeugs 10 ermittelten derzeitigen, bzw. über einen bestimmten Zeitraum gemittelten Stromwertes können eine oder mehrere Kenngrößen in die Berechnung des maximal zulässigen Stromes eingehen, die die Neigung der verwendeten Zelle(n) 14 zur internen Wärmeentwicklung beschreiben (z.B. der innere Widerstand der Zellen).

Wenn das Gerät nur mit einem bestimmten Batterietyp (Zellentyp) verbunden und betrieben werden kann, kann ein konstanter Rechenwert als Kenngröße für den verwendeten Batteriepack/Zellenart angenommen werden. Bei der Möglichkeit der Verwendung verschiedener Batteriepacks an einem Elektrowerkzeug kann diese Kenngröße über eine geeignete Vorrichtung am jeweiligen Batteriepack codiert und vom Gerät 10 erfasst und ausgewertet werden.

Es kann eine Kenngröße der Batterie 14 - etwa ein Gleichstromwiderstand-auch von dem von der Batterie gespeisten Elektrowerkzeug 10 dynamisch ermittelt werden, etwa durch Vergleich von Strom-Spannungswerten während des Betriebes, und dann für die Berechung von Temperaturgrenze ($T_{limit}$) verwendet werden, wie weiter unten noch näher ausgeführt wird.

Neben der Verwendung von gemessenen Stromwerten kann auch von sinnvoll, beispielsweise anhand der Überwachung eines Kühlaggregats des Geräts 10, geschätzten Stromwerten für die Berechnung der Temperaturgrenze ($T_{limit}$) ausgegangen werden.

Das erfindungsgemäße Verfahren ist insbesondere bei Li-Ionen-Batterien sinnvoll.

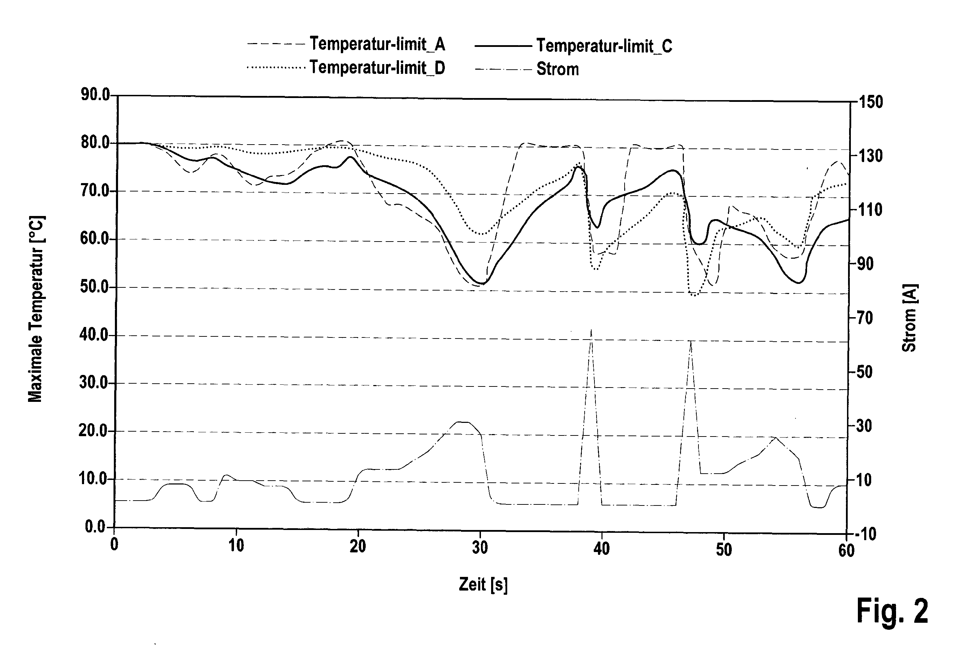

Als Beispiel für geeignete Funktionen zur Berechnung einer maximalen Temperatur, bei der die Entladung der Zelle noch zugelassen ist, seien zwei in den Gleichungen (3) und (4) dargestellte Funktionen genannt, vergleiche Figur 2, oben, in der drei verschiedene Varianten der berechneten Temperaturgrenzen für das Unterbrechen des Laststromes als Funktion des im vorhergehenden Zeitintervall entnommenen Stromes dargestellt sind:

$$\text{Temp-limit\_A (t)} = T_{max} (I=0) - F1 * I_{mittel} (3s) \tag{3}$$

$$\text{Temp-limit\_C (t)} = T_{max} (I=0) - F2 * I_{mittel} (\text{gewichtet, 8s}) \tag{4}$$

Als Beispielwert für die vorgebbare statische Temperaturgrenze ist in Figur 2 eine maximale Temperatur $T_{max}$ (I=0) von 80°C verwendet. F1, F2, F3 sind Faktoren. Sobald ein Laststrom fließt, also I und damit auch $I_{mittel}$ ungleich Null werden, ergibt sich gemäß den Gleichungen (3) und (4) eine neue Temperaturgrenze, die jedenfalls unter 80°C liegt. Bei einer Funktion gemäß Gleichung (3) ist jedoch bereits 3s nach dem Fließen eines hohen Laststromes wieder eine Erwärmung der Zellen 14 bis zum maximal möglichen Wert von 80°C zugelassen. Dieses Verhalten wird auch in Figur 2 verdeutlicht, wo ersichtlich ist, dass die Funktion Temp-limit_A (t) beinahe unmittelbar nach einem Strompeak wieder den Wert $T_{max}$ (I=0), nämlich die gewählten 80°C, annimmt, während die weiteren Funktionen, vergleiche Gleichungen (3) und (4), eine in der Überlast-Überwachung implementierte trägere Reaktion beziehungsweise ein längeres Gedächtnis repräsentieren.

Im Falle der Gleichung (4) wird durch eine Mittelwertbildung über die zurückliegenden 8s erreicht, dass nach dem Fließen eines höheren Stromes für 8 Sekunden die Temperatur für das Abschalten des Stromes gegenüber der maximalen Temperatur (80°C) deutlich verringert ist, so dass bei einer erneuten Entnahme von höheren Strömen während dieser Zeit das System in die thermische Abschaltung gehen würde.

Während sich die Gleichung (3) für eine Batterie eignen würde, deren Zellen 14 und deren Temperatursensor 26 eine sehr geringe thermische Trägheit besitzt, kann die Gleichung (4) als eine Beispielfunktion für Zellen und/oder Temperaturfühler mit einer größeren Trägheit betrachtet werden.

Es ist günstig, das Quadrat des Laststromes I für die Berechung zu verwenden, wie dies bei der Funktion gemäß der folgenden Gleichung (5), vergleiche die Kurve Temp-limit_D in Figur 2, gezeigt wird. Bei diesem Vorgehen wird die stärkere interne Erwärmung der Zellen bei hohen Strömen berücksichtigt, während mittlere und niedrige Ströme kaum zu einer Absenkung der in einem bestimmten Moment maximal zulässigen Betriebstemperatur der Batterie 14 beitragen.

$$\text{Temp-limit\_D (t)} = T_{max} (I=0) - F3 * I^2_{mittel} (\text{gewichtet, 8s}) \tag{5}$$

Bei Anwendung verschiedener Temperaturgrenzen für das Einleiten einer Reduzierung des Laststromes und der vollständigen Unterbrechung des Laststromes können auch Formeln von unterschiedlicher mathematischer Struktur für die Berechung dieser verschiedenen Temperaturgrenzen verwendet werden. So können z.B. die vorhergehende Strombelastung und deren zeitlicher Abstand vom aktuellen Zeitpunkt der Berechnung verschieden stark gewichtet werden. Daraus ergibt sich, dass Temperaturgrenzen für ein Reduzieren des Laststromes nicht zu jedem Zeitpunkt um einen konstanten Faktor oder einen konstanten Temperaturunterschied von dem Temperaturwert verschieden sind, der das Unterbrechen des Stromflusses erfordert.

Es ist eine Variante des Verfahrens möglich, in der aus Wertepaaren von jeweils zu einem Zeitpunkt gemessenen Laststrom und dem gleichzeitig gemessenen Klemmspannungen der Batterie oder der Spannungswerte einzelner Zellen der Gleichstrom-Innenwiderstand der Zellen ermittelt wird und in der dieser Innenwiderstandswert als Parameter in die Gleichung zur Berechung der maximal zulässigen Temperatur der Zellen eingeht. Auf diese Weise kann die Berechnung der maximal zulässigen Zellentemperatur einen für die innere Erwärmung der Zellen wichtigen individuellen Parameter der Zellen berücksichtigen und der Alterung oder dem Verschleiß der elektrochemischen Zellen Rechung getragen werden.

Durch die Kombination der beschriebenen Erfindung mit einem Sicherheitsmechanismus bekannter Art, etwa der Kombination mit einer Thermosicherung, wird die Sicherheit eines mittels der erfindungsgemäßen Überlastdetektion überwachten Systems noch einmal deutlich erhöht, indem die variablen Temperaturgrenzen vorrangig für die Erhaltung des Energiespeichervermögens der Zelle relevant sind, während eine Thermosicherung nur bei einem Temperaturanstieg über das zugelassene Maß hinaus den Strom unterbricht.

**Patentansprüche**

**1.** Verfahren zur Detektion einer Überlastsituation bei einem batteriebetriebenen Gerät (10) mit einem Elektromotor (12), wobei ein Laststrom des Elektromotors ermittelt und verwendet wird, um auf eine thermische Überlastung der Batterie (14) zu schließen,

**dadurch gekennzeichnet,**

**dass** mittels einer vorgebbaren vom ermittelten Laststrom abhängigen Funktion eine zeitlich variable maximal zulässige Temperaturgrenze für die Batterie (14) berechnet wird, wobei die Funktion ihren maximalen Wert, der einer vorgebbaren statischen Temperaturgrenze entspricht, bei verschwindendem Laststrom annimmt, und dass die berechnete variable Temperaturgrenze mit einer aktuellen, gemessenen Temperatur der Batterie (14) verglichen und aus dem Resultat des Vergleichs auf eine thermische Überlastung der Batterie (14) geschlossen wird.

2. Verfahren nach Anspruch 1, **dadurch gekennzeichnet, dass** ein über ein vorgebbares Zeitintervall integrierter oder gemittelter Laststromwert als Eingangsgröße der laststromabhängigen Funktion zur Berechnung der variablen Temperaturgrenze verwendet wird.

3. Verfahren nach Anspruch 2, **dadurch gekennzeichnet, dass** der Laststromwert vor der Integration oder Mittelung mit einem Exponenten potenziert wird.

4. Verfahren nach einem der Ansprüche 1 bis 3, **dadurch gekennzeichnet, dass** der aktuelle Laststrom als Gegenmaßnahme auf eine festgestellte thermische Überlastung reduziert oder unterbrochen wird.

5. Verfahren nach Anspruch 4, **dadurch gekennzeichnet, dass** ausgehend von verschiedenen statischen Temperaturgrenzen und/oder verschiedenen Funktionen mehrere variable Temperaturgrenzen berechnet werden, und dass der Laststrom erst beim Überschreiten der höchsten berechneten variablen Temperaturgrenze unterbrochen wird, während der Laststrom beim Überschreiten der niedrigeren berechneten variablen Temperaturgrenzen jeweils auf bestimmte, vorgebbare Werte reduziert wird.

6. Verfahren nach einem der Ansprüche 1 bis 5, **dadurch gekennzeichnet, dass** die Umgebungstemperatur des Gerätes (10) als zusätzliche Eingangsgröße der laststromabhängigen Funktion zur Berechnung der variablen Temperaturgrenze verwendet wird.

7. Verfahren nach einem der Ansprüche 1 bis 6, **dadurch gekennzeichnet, dass** zur Berechnung der variablen Temperaturgrenze eine Funktion vorgegeben wird, die das thermische Verhalten der Batterie (14) hinsichtlich der messbaren Temperaturerhöhung nach dem Fließen eines bestimmten Laststromes abbildet.

8. Verfahren nach Anspruch 7, **dadurch gekennzeichnet, dass** mindestens eine, das thermische Verhalten der Batterie (14) beschreibende und in die Funktion eingehende, Kenngröße in dem batteriebetriebenen elektrischen Gerät (10) dynamisch ermittelt wird.

9. Verfahren nach einem der Ansprüche 1 bis 8, **dadurch gekennzeichnet, dass** der Laststrom gemessen oder anhand eines im Gerät (10) ablaufenden Prozesses, der mit dem Betrieb des Elektromotors (12) in Verbindung steht, näherungsweise erfasst wird.

10. Verfahren nach einem der Ansprüche 1 bis 9, **dadurch gekennzeichnet, dass** die Temperatur an einem oder mehreren Punkten an oder in der Nähe der elektrochemischen Zellen der Batterie (14) gemessen wird.

11. Überwachungsvorrichtung für ein batteriebetriebenes Gerät (10) mit einem Elektromotor (12), insbesondere für ein akkumulatorbetriebenes Elektrohandwerkzeug, zur Detektion einer Überlastsituation, mit einer einen Laststrom des Elektromotors (12) ermittelnden Einrichtung,

**dadurch gekennzeichnet,**

**dass** die Überwachungsvorrichtung ferner eine Logikeinrichtung (28) aufweist, in der eine vorgebbare vom ermittelten Laststrom abhängige Funktion implementiert ist, um aus einer in der Logikeinrichtung (28) gespeicherten maximal zulässigen statischen Temperaturgrenze eine zeitlich variable Temperaturgrenze zu berechnen und diese mit der aktuellen, mittels eines Sensors (26) gemessenen Temperatur der Batterie (14) zu vergleichen, um daraus auf eine thermische Überlastung der Batterie (14) zu schließen.

**Claims**

1. Method for detecting an overload situation in a battery-operated device (10) with an electric motor (12), wherein a load current of the electric motor is determined and used to draw a conclusion about thermal overloading of the battery (14),

**characterized**

**in that** a temporally variable maximum permissible temperature limit for the battery (14) is calculated by means of a predefinable function which is dependent on the determined load current, wherein the function assumes its maximum value, which corresponds to a predefinable static temperature limit, when the load current disappears, and in that the calculated variable temperature limit is compared with a present measured temperature of the battery (14) and conclusions are drawn about thermal overloading of the battery (14) from the comparison.

2. Method according to Claim 1, **characterized in that** a load current value which is integrated or averaged over a predefinable time interval is used as input variable of the load current-dependent function for calculating the variable temperature limit.

3. Method according to Claim 2, **characterized in that** the load current value is raised to the power of an exponent before the integration or averaging.

4. Method according to any of Claims 1 to 3, **characterized in that** the present load current is reduced or interrupted as a countermeasure to established thermal overloading.

5. Method according to Claim 4, **characterized in that** a plurality of variable temperature limits are calculated proceeding from various static temperature limits and/or various functions, and **in that** the load current is only interrupted when the highest calculated variable temperature limit is exceeded, whereas the load current is reduced in each case to particular predefinable values when the lower calculated variable temperature limits are undershot.

6. Method according to any of Claims 1 to 5, **characterized in that** the ambient temperature of the device (10) is used as additional input variable for the load current-dependent function for calculating the variable temperature limit.

7. Method according to any of Claims 1 to 6, **characterized in that**, in order to calculate the variable temperature limit, a function is predefined which represents the thermal behaviour of the battery (14) with respect to the measurable temperature increase after a particular load current has flowed.

8. Method according to Claim 7, **characterized in that** at least one characteristic curve which describes the thermal behaviour of the battery (14) and is included in the function is dynamically determined in the battery-operated electrical device (10).

9. Method according to any of Claims 1 to 8, **characterized in that** the load current is measured or is approximately recorded on the basis of a process running in the device (10), which process is connected to the operation of the electric motor (12).

10. Method according to any of Claims 1 to 9, **characterized in that** the temperature is measured at one or more points on or in the vicinity of the electrochemical cells of the battery (14).

11. Monitoring device for a battery-operated device (10) with an electric motor (12), in particular for a rechargeable battery-operated electric hand tool, for detecting an overload situation, having a unit for determining a load current of the electric motor (12),

**characterized**

**in that** the monitoring device also has a logic unit (28) in which a predefinable function which is dependent on the determined load current is implemented, in order to calculate a temporally variable temperature limit from a maximum permissible static temperature limit stored in the logic unit (28) and to compare said temporally variable temperature limit with the present temperature of the battery (14) measured by means of a sensor (26) in order to draw conclusions therefrom about thermal overloading of the battery (14).

**Revendications**

1. Procédé de détection d'une situation de surcharge sur un appareil (10) fonctionnant sur batterie muni d'un moteur électrique (12), un courant de charge du moteur électrique étant déterminé et utilisé pour déduire une surcharge thermique de la batterie (14),

**caractérisé en ce**
**qu'**une limite de température maximale admissible variable dans le temps de la batterie (14) est calculée au moyen d'une fonction pouvant être prédéfinie et dépendante du courant de charge déterminé, la fonction prenant sa valeur maximale, laquelle correspond à une limite de température statique pouvant être prédéfinie, lorsque le courant de charge est infiniment petit, et en ce que la limite de température variable calculée est comparée à une température actuelle mesurée de la batterie (14) et une surcharge thermique de la batterie (14) est déduite du résultat de la comparaison.

2. Procédé selon la revendication 1, **caractérisé en ce qu'**une valeur du courant de charge intégrée ou dont la moyenne est calculée sur un intervalle de temps pouvant être prédéfini est utilisée comme grandeur d'entrée de la fonction dépendante du courant de charge pour calculer la limite de température variable.

3. Procédé selon la revendication 2, **caractérisé en ce que** la valeur du courant de charge est élevée à une puissance avec un exposant avant l'intégration ou le calcul de la moyenne.

4. Procédé selon l'une des revendications 1 à 3, **caractérisé en ce que** le courant de charge actuel est réduit ou interrompu en tant qu'action correctrice d'une surcharge thermique constatée.

5. Procédé selon la revendication 4, **caractérisé en ce que** plusieurs limites de température variables sont calculées à partir de différentes limites de température statiques et/ou différentes fonctions, et **en ce que** le courant de charge n'est interrompu qu'en cas de dépassement de la plus haute limite de température variable calculée, alors qu'en cas de dépassement des limites de température variables calculées plus basses, le courant de charge est à chaque fois réduit à des valeurs données pouvant être prédéfinies.

6. Procédé selon l'une des revendications 1 à 5, **caractérisé en ce que** la température ambiante de l'appareil (10) est utilisée en tant que grandeur d'entrée supplémentaire de la fonction dépendante du courant de charge pour calculer la limite de température variable.

7. Procédé selon l'une des revendications 1 à 6, **caractérisé en ce que** pour calculer la limite de température variable, une fonction est prédéfinie, laquelle représente le comportement thermique de la batterie (14) du point de vue de l'augmentation de température mesurable d'après la circulation d'un courant de charge donné.

8. Procédé selon la revendication 7, **caractérisé en ce qu'**au moins une grandeur caractéristique, décrivant le comportement thermique de la batterie (14) et intervenant dans la fonction est déterminée dynamiquement dans l'appareil (10) électrique fonctionnant sur batterie.

9. Procédé selon l'une des revendications 1 à 8, **caractérisé en ce que** le courant de charge est mesuré ou détecté approximativement au moyen d'un processus qui se déroule dans l'appareil (10), lequel est associé au fonctionnement du moteur électrique (12).

10. Procédé selon l'une des revendications 1 à 9, **caractérisé en ce que** la température est mesurée en un ou plusieurs points sur ou à proximité des cellules électrochimiques de la batterie (14).

11. Dispositif de surveillance pour un appareil (10) fonctionnant sur batterie muni d'un moteur électrique (12), notamment pour un outillage électrique fonctionnant sur accumulateur, servant à détecter une situation de surcharge, comprenant un dispositif qui détermine un courant de charge du moteur électrique (12),
**caractérisé en ce**
**que** le dispositif de surveillance possède en outre un dispositif logique (28) dans lequel est mise en oeuvre une fonction pouvant être prédéfinie et dépendante du courant de charge déterminé afin de calculer, à partir d'une limite de température statique maximale admissible enregistrée dans le dispositif logique (28), une limite de température variable dans le temps et de comparer celle-ci à la température actuelle de la batterie (14) mesurée au moyen d'une sonde (26) afin d'en déduire une surcharge thermique de la batterie (14).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005038225 A1